# EUROPEAN PATENT APPLICATION

(11) **EP 4 442 112 A1**
(43) Date of publication of application: **09.10.2024**
(21) Application number: 24161797.6
(22) Date of filing: 06.03.2024
(51) Int. Cl.: A01G 7/00, E02B 3/18, E02B 11/00

(54) **PEAT MEADOW**

(30) Priority: 22.03.2023 NL 2034403
(71) Applicant: de Jong, Freerk, 1531 MT Wormer (NL)
(72) Inventor: de Jong, Freerk, 1531 MT Wormer (NL)
(74) Representative: van Breda, Jacobus

(57) **Abstract**

Peat meadow comprising a peat layer and topsoil above the peat layer, wherein the peat meadow is provided with a trench/ditch or trenches/ditches containing water, the water level of which is at or near a boundary layer between the peat layer and the topsoil. Furthermore, the ditch or ditches are filled with tree bark, and the tree bark is covered with topsoil. The calved ditch edges have been or are being restored with plant remains and covered with dredged material or topsoil washed away from the ditch.

## Description

The invention relates to a peat meadow suitable for arable farming or livestock farming, comprising a peat layer with topsoil above the peat layer, and wherein the peat meadow is provided with a trench/ditch or trenches/ditches containing water, the water level of which reaching at least a level on which the peat layer is located.

The report "Ontwikkeling Blauwgrasland door plaggen in Oostelijke Vechtplassen", Alterra report by Van Delft S P J, part 2550, January 1, 2014, XP093081625 ISSN 1566-7197 discloses the conditions for the development of blue grassland. Bluegrass needs poor and moist soil with high demands on water purity. These are conditions that do not apply to peat meadows that are suitable for arable farming or livestock farming. The invention relates to such peat meadow.

Also not relevant to the invention is the publication by Woestenberg Martin: " Waarheen met veen", January 1, 2009, pages 1 -61, XP093081596, Wageningen ISBN 978-90-77-82410-8.

The aim of the invention is to modify the peat meadow mentioned in the introduction and known for arable farming or livestock farming in such a way that the emission of undesirable gases, such as CO2, and gases containing nitrogen and the like, is counteracted as much as possible. It is also an object to prevent pollution of surface water.

The peat meadow according to the invention is characterized for this purpose by one or more of the appended claims.

According to a first aspect of the invention, the peat meadow is characterized in that the water level is elevated and is located on or near a boundary layer between the peat layer and the topsoil. This ensures that the peat layer becomes more or less saturated with water, so that the peat does not dry out and the exhalation of harmful gases is prevented. In particular, this measure limits the CO2 burden to the environment, and possibly also (part of) the nitrogen problem. The invention also benefits meadow birds, biodiversity in general, and insects. It seems that with the invention the holy grail for The Hague-politicians and Rijkswaterstaat becomes available.

To assist in maintaining the water level at or near the boundary layer between the peat layer and the topsoil, it is preferable that topsoil is excavated from the ditch or ditches, after which the ditch or ditches are filled with tree bark. This tree bark provides both horizontal and vertical drainage to a depth of 50-60 cm, and provides sufficient carrying capacity for working on the land with machines and grazing with light livestock.

The tree bark is preferably covered with the previously excavated topsoil. Tree bark has buoyancy so that it exerts negligible pressure on the peat layer, which is therefore not undesirably loaded, as a result of which water could be squeezed out of the peat layer in a horizontal direction. Such dewatering should be avoided, not only because it could cause the peat layer to become dry, but also because the escaping water could contaminate the surface water.

It is preferable that moisture is introduced into the peat layer, and a very suitable measure for this purpose is to provide the tree bark with a drain to feed the peat layer with water.

Furthermore, it is desirable that when the ditch or ditches are far apart, a drain (in a trench of 50 cm of tree bark) is dug in the middle of the peat meadow (field) to supply the peat with water everywhere. Ditch edges of drained meadow that have been eroded are preferably supplemented or restored with ditch dirt, such as plant waste, and further with dredged material or topsoil washed away from the ditch.

The invention will be further explained with reference to the attached drawing.

The drawing shows both the situation of a peat meadow according to the state of the art and according to the invention.

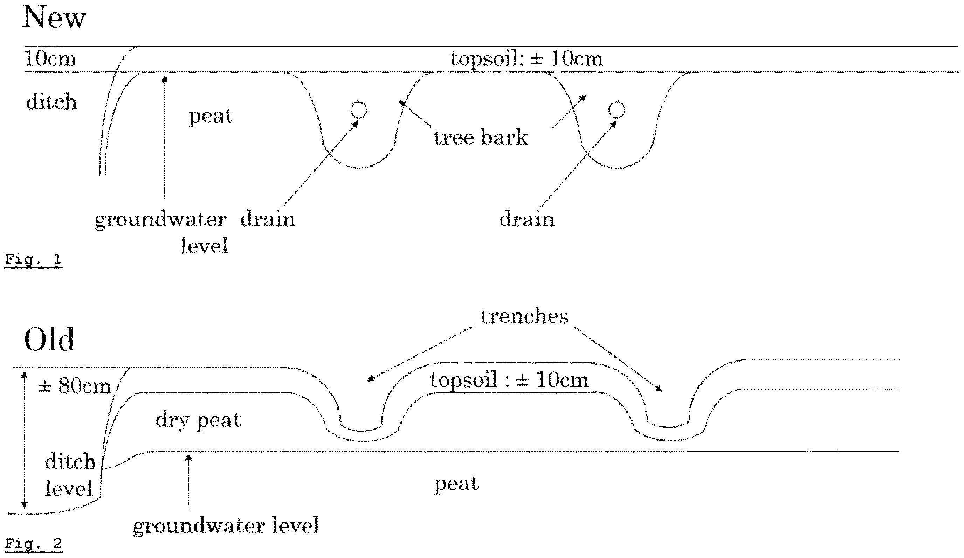

Figure 1 shows the state of the art in which groundwater level is in the peat layer. On top of the submerged peat layer there is dry peat that is covered with a layer of topsoil of approximately 10 cm. The peat meadow is further crossed with ditches and trenches, with the water in the ditches being approximately 80 cm below ground level.
Figure 2 shows the peat meadow according to the invention. The groundwater level has been raised to approximately 10 cm below ground level, which corresponds to the thickness of the topsoil layer on the peat layer. As a result, the peat layer is permanently under water, which counteracts or prevents the emission of harmful gases. In the ditches that cross the peat meadow, tree bark has been placed that is covered with the topsoil that is on the peat layer. A drain or drains may also be installed in the tree bark filling of the trenches.

It will be clear to those skilled in the art that within the context of the invention various variations are possible without departing from the inventive idea as specified in the appended claims. Such variations also fall under the protection afforded to the invention, and the scope of protection is therefore determined exclusively by the following claims, whereby the explanation given above only serves to resolve any ambiguities regarding the understanding of these claims.

## Claims

1. Peat meadow suitable for arable farming or livestock farming, comprising a peat layer and topsoil above the peat layer, whereby the peat meadow is provided with a trench/ditch or trenches/ditches containing water, the water level of which reaches at least to a level at which the peat layer is located, **characterized in that** the water level is raised and is located on or near a boundary layer between the peat layer and the topsoil.

2. Peat meadow according to claim 1, **characterized in that** the ditch or ditches are filled with tree bark to provide load-bearing capacity and to provide vertical and horizontal drainage to a depth of 50-60 cm.

3. Peat meadow according to claim 2, **characterized in that** the tree bark is covered with topsoil.

4. Peat meadow according to claim 2 or 3, **characterized in that** a drain (in a trench of 50 cm tree bark) is dug in the peat meadow (field) to supply the peat with water everywhere.

5. Peat meadow according to any of claims 1-4, **characterized in that** ditch edges that have been eroded are supplemented or restored with ditch waste, such as plant waste, and furthermore with dredged material or topsoil from the ditch.
